Europäisches Patentamt

European Patent Office

Office européen des brevets

(19)

(11) Numéro de publication : **0 062 595**
**B1**

(12) **FASCICULE DE BREVET EUROPÉEN**

(45) Date de publication du fascicule du brevet :
09.01.85

(51) Int. Cl.⁴ : **B 60 B 39/12**

(21) Numéro de dépôt : **82420046.3**

(22) Date de dépôt : **02.04.82**

(54) **Bande antidérapante pour véhicules automobiles.**

(30) Priorité : **03.04.81 FR 8107100**

(43) Date de publication de la demande :
**13.10.82 Bulletin 82/41**

(45) Mention de la délivrance du brevet :
**09.01.85 Bulletin 85/02**

(84) Etats contractants désignés :
**AT CH DE GB IT LI SE**

(56) Documents cités :
**FR-A- 2 112 107**
**US-A- 1 815 435**
**US-A- 2 361 165**
**US-A- 3 836 075**
**US-A- 4 223 835**

(73) Titulaire : **Mermet, Jules**
**127, rue René Nicod**
**F-01100 Oyonnax (FR)**

(72) Inventeur : **Mermet, Jules**
**127, rue René Nicod**
**F-01100 Oyonnax (FR)**

(74) Mandataire : **Maureau, Bernard**
**Cabinet GERMAIN & MAUREAU Le Britannia - Tour C**
**20, Boulevard Eugène Déruelle**
**F-69003 Lyon (FR)**

Jouve, 18, rue St-Denis, 75001 Paris, France

Description

L'invention a pour objet une bande antidérapante pour véhicules automobiles.

Il est connu de réaliser le dégagement des
véhicules enlisés dans des sols meubles, tels que
la neige, la boue, le sable... en interposant des
bandes antidérapantes entre le sol et les roues
motrices du véhicule. Il est également connu de
réaliser de telles bandes antidérapantes par
assemblage de plaques élémentaires dont la face
inférieure et la face supérieure comportent des
reliefs permettant, d'une part, l'adhérence de la
plaque sur le sol et, d'autre part, l'adhérence des
bandes de roulement du véhicule sur la plaque.

On connaît notamment la bande antidérapante
décrite dans FR-A-2 112 107 qui correspond au
préambule de la revendication 1.

Ces bandes antidérapantes sont efficaces, mais
l'expérience prouve que leur degré de commodité
est fonction des dimensions des pneumatiques
du véhicule. Pour une bonne commodité, il faut
en effet que la largeur des plaques élémentaires,
et donc de la bande, soit sensiblement égale à
celle de la bande de roulement des pneumatiques
du véhicule ; dans l'hypothèse en effet où la
bande antidérapante est plus large que le pneumatique, il devient très difficile, sinon impossible,
de la mettre en place, c'est-à-dire de l'introduire
sous le pneumatique. La solution idéale consisterait donc à disposer de bandes étudiées en
fonction des diverses dimensions de pneumatiques se trouvant sur le marché. Cela est possible,
mais si les plaques élémentaires constituant la
bande sont réalisées en matière plastique moulée, cela nécessite l'utilisation de nombreux moules, ce qui augmente les frais non seulement de
fabrication des plaques, mais aussi de leur
stockage à tous les niveaux, c'est-à-dire fabrication et commercialisation.

L'invention écarte au moins partiellement ces
inconvénients, en proposant pour chaque plaque
antidérapante un agencement tel qu'elle puisse
être utilisée sans difficulté sur des véhicules
équipés de pneumatiques de dimensions très
différentes.

Les moyens définis dans la partie caractérisante de la revendication 1 permettent d'atteindre
cet objectif.

Différents moyens d'assemblage peuvent être
adoptés, sous réserve de permettre à la bande de
présenter une rigidité suffisante lorsque les plaques élémentaires ont été assemblées. C'est ainsi
que suivant une forme d'exécution, chaque plaque comporte deux nervures terminales constituant deux de ses bords adjacents, et deux
rainures terminales constituant ses deux autres
bords adjacents, ces nervures et rainures jouant
les rôles de tenons et mortaises d'assemblage.

Suivant une autre caractéristique de l'invention, les deux bords agencés en forme de nervures ou tenons présentent, d'ailleurs, un profil en
coin, ce qui facilite la présentation et l'introduction, sous la bande de roulement du pneumatique, de la plaque constituant l'une des extrémités
de la bande antidérapante.

L'invention sera bien comprise d'ailleurs à
l'aide de la description qui suit, en référence au
dessin schématique annexé représentant, à titre
d'exemple non limitatif, une forme d'exécution de
cette bande antidérapante :

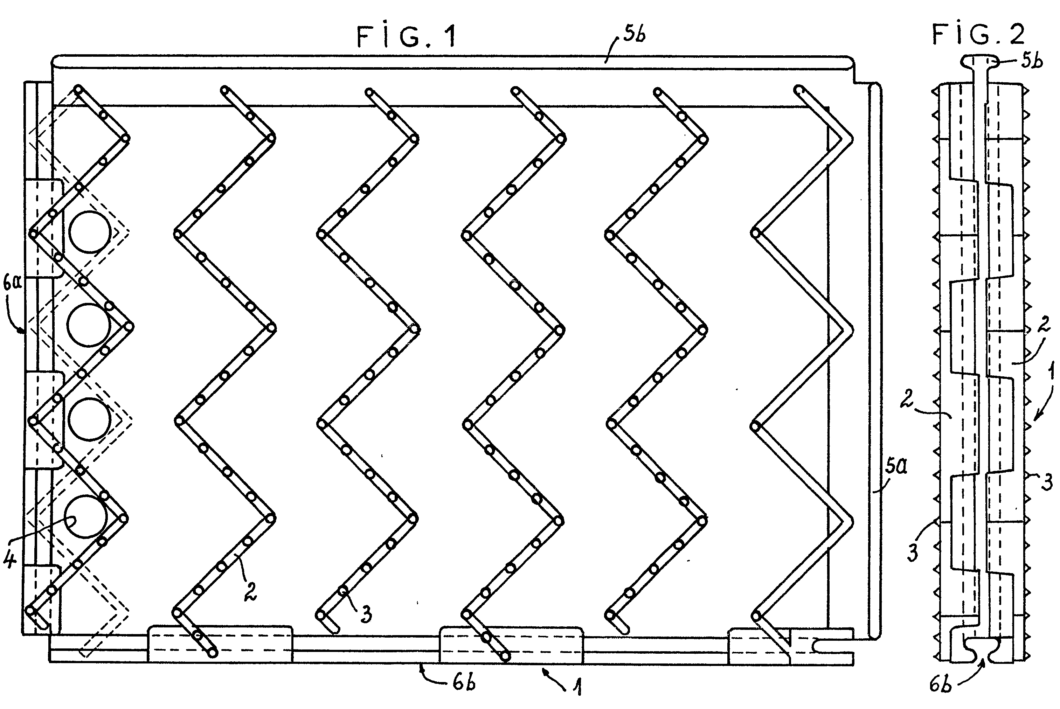

Figure 1 est une vue en plan par dessus de
l'une de ses plaques élémentaires ;

Figures 2 et 3 montrent cette plaque en élévation vue sur l'un de ses bords transversaux et sur
l'un de ses bords longitudinaux ;

Figures 4 et 5 sont des vues en plan d'une
bande constituée par assemblage de quatre telles
plaques, dans les deux positions relatives d'utilisation des plaques.

Cette bande antidérapante est constituée d'un
nombre quelconque de plaques élémentaires, qui
sont désignées de façon générale par (1) ; ces
plaques peuvent être au nombre par exemple de
quatre, cinq, six..., l'essentiel étant que le nombre
de ces plaques soit suffisant pour que la bande
constituée par assemblage de telles plaques ait
une longueur suffisante pour permettre le dégagement d'un véhicule.

Chacune de ces plaques (1) est réalisée en
matière plastique moulée et comporte, venant de
moulage en une seule pièce, non seulement ses
moyens d'assemblage avec d'autres plaques
identiques, mais aussi les moyens permettant à la
plaque de remplir son rôle antidérapant ; et c'est
ainsi que sur chacune de ses deux faces, la
plaque (1) présente des nervures transversales et
sinusoïdales (2) sur lesquelles sont prévus des
picots ou pointes d'accrochage (3). Dans la plaque (1) sont en outre prévus, à proximité de l'un
de ses bords, plusieurs orifices (4) dont le rôle est
de permettre l'accrochage de la plaque à un
organe du véhicule, par exemple son pare-chocs,
afin que lorsque la bande antidérapante a joué
son rôle pour permettre le dégagement du véhicule, la bande soit elle-même emmenée par le
véhicule.

Il est important de noter que la plaque 1
présente un profil rectangulaire ; et c'est ainsi
que les dimensions longitudinale et transversale
de la plaque peuvent être respectivement de 20 et
de 14 cm.

Quant aux moyens d'accrochage dont chaque
plaque (1) est munie pour permettre son assemblage avec une autre plaque identique, ils sont
constitués :

— par deux nervures (5a, 5b) s'étendant sur
deux bords adjacents de la plaque, à savoir celle
(5a) sur un bord transversal et celle (5b) sur un
bord longitudinal,

— et par deux rainures (6a, 6b) s'étendant sur
les deux autres bords adjacents de la plaque, à
savoir celle (6a) sur un bord transversal et celle
(6b) sur un bord longitudinal.

L'agencement de ces nervures (5a, 5b) et rainures (6a, 6b) peut être quelconque, et c'est ainsi qu'il peut présenter les formes représentées au dessin. Les deux nervures (5a, 5b) ont en effet avantageusement une forme de tenon rectiligne et continu ; et les deux rainures (6a, 6b) ont avantageusement la forme d'une mortaise rectiligne mais discontinue, dont la discontinuité est destinée à faciliter le démoulage de la plaque.

Il est en outre à remarquer que comme le montre le dessin, la plaque peut présenter, du côté de son bord transversal (5a), une forme de coin (7) dont le rôle est de faciliter la pénétration de la plaque sous la bande de roulement du pneumatique d'un véhicule. Il est d'ailleurs évident que cette forme en coin peut également être prévue du côté du bord longitudinal (5b).

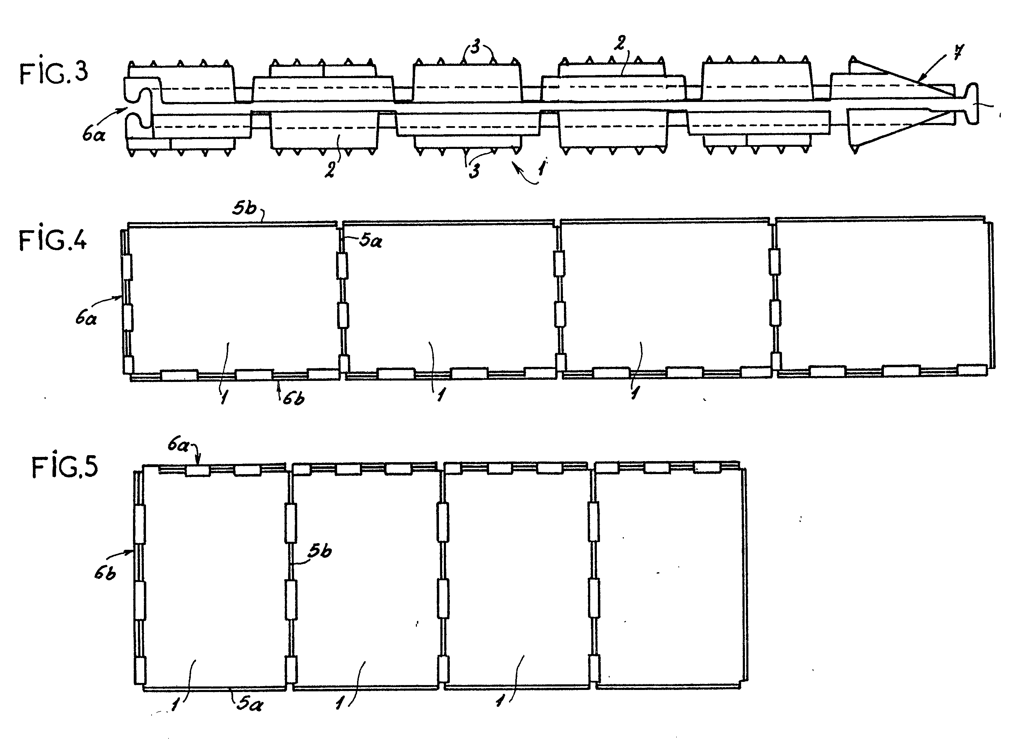

Le mode d'utilisation de telles plaques en vue de la constitution d'une bande antidérapante se conçoit aisément et est illustré par les figures 4 et 5. Suivant que les pneumatiques ont une bande de roulement relativement étroite ou relativement large, les plaques sont assemblées entre elles soit comme le montre la figure 4, soit comme le montre la figure 5.

Dans le premier cas, les plaques sont disposées les unes à la suite des autres dans le sens de leur longueur ; pour ce faire, la nervure ou tenon (5a) d'une plaque coopère avec la rainure ou mortaise (6a) de la plaque voisine.

Dans le second cas, les plaques sont alignées les unes à la suite des autres dans le sens de leur largeur ; c'est alors la nervure ou tenon (5b) d'une plaque qui coopère avec la rainure ou mortaise (6b) de la plaque adjacente.

Dans tous les cas, grâce à la forme des nervures ou tenons (5a, 5b) et des rainures ou mortaises (6a, 6b), la liaison entre les plaques donne à la bande une rigidité suffisante pour qu'elle ne se déforme pas dans le sol et qu'ainsi elle joue efficacement son rôle antidérapant.

## Revendications

1. Bande antidérapante pour véhicules automobiles, du type de celles constituées par assemblage de plaques élémentaires rectangulaires (1) comportant des moyens de liaison (5a, 5b, 6a, 6b) entre elles sur leurs quatre côtés, caractérisée en ce que les moyens de liaison (5a, 5b, 6a, 6b) permettent d'assembler les plaques les unes à la suite des autres soit dans le sens de leur longueur, soit dans le sens de leur largeur de façon à pouvoir obtenir deux largeurs différentes de bande.

2. Bande antidérapante selon la revendication 1, caractérisée en ce que chacune de ses plaques élémentaires (1) comporte deux nervures terminales (5a, 5b) constituant deux de ses bords adjacents, et deux rainures terminales (6a, 6b) constituant ses deux autres bords adjacents, ces nervures et rainures jouant le rôle de tenons et mortaises d'assemblage.

3. Bande antidérapante selon les revendications 1 et 2, caractérisée en ce que les bords de chaque plaque élémentaire (1) agencés en forme de nervures ou tenons (5a, 5b) présentent un profil en coin (7), ce qui facilite la présentation et l'introduction, sous la bande de roulement du pneumatique, de la plaque constituant l'une des extré.nités de la bande antidérapante.

## Claims

1. An antiskid mat for automotive vehicles, of the type formed by assembling constituent rectangular plates (1) comprising connection means (5a, 5b, 6a, 6b) on their four sides, characterized in that the connection means (5a, 5b, 6a, 6b) allow the plates to be assembled in succession either in the direction of their length or in the direction of their width so as to be able to obtain two different mat widths.

2. An antiskid mat according to claim 1, characterized in that each of its constituent plates (1) comprises two end ribs (5a, 5b) forming tw o of its adjacent edges, and two end grooves (6a, 6b) forming its other two adjacent edges, these ribs and grooves acting as tenon and mortice assemblies.

3. An antiskid mat according to claims 1 and 2, characterized in that the edges of each constituent plate (1) arranged in the shape of ribs or tenons (5a, 5b) have a corner profile (7) which facilitates the presentation and introduction of the plate, forming one of the ends of the antiskid mat, under the tread of the tyre.

## Ansprüche

1. Gleitschutzmatte für Kraftfahrzeuge, die aus rechteckigen Plattenelementen (1) zusammengefügt ist, die an ihren vier Seiten Mittel (5a, 5b, 6a, 6b) zu ihrer gegenseitigen Verbindung aufweisen, dadurch gekennzeichnet, daß die Verbindungsmittel (5a, 5b, 6a, 6b) ein Aneinanderfügen der Plattenelemente sowohl in Richtung ihrer Längsseiten als auch in Richtung ihrer Breitseiten ermöglichen, derart daß eine Gleitschutzmatte mit zwei unterschiedlichen Breiten erhältlich ist.

2. Gleitschutzmatte nach Anspruch 1 dadurch gekennzeichnet, daß jedes ihrer Plattenelemente (1) zwei stirnseitige Rippen (5a, 5b) besitzt, die zwei ihrer benachbarten Ränder bilden, sowie zwei stirnseitige Nuten (6a, 6b), die die beiden anderen benachbarten Ränder bilden, wobei diese Rippen und Nuten die Funktion von Verbindungszapfen und -zapfenlöchern haben.

3. Gleitschutzmatte nach Anspruch 1 und 2 dadurch gekennzeichnet, daß die in Form von Rippen oder Verbindungszapfen (5a, 5b) ausgebildeten Ränder jedes Plattenelements (1) ein keilförmiges Profil (7) besitzen, wodurch das Vorlegen und Einbringen des eines der Enden der Gleitschutzmatte bildenden Plattenelements unter die Lauffläche des Fahrzeugreifens erleichtert wird.

FIG. 2

FIG. 1

FIG.3

FIG.4

FIG.5

0 062 595